(19) Europäisches Patentamt

European Patent Office

Office européen des brevets

(11) **EP 1 382 635 A1**

(12) **DEMANDE DE BREVET EUROPEEN**

(43) Date de publication:
**21.01.2004 Bulletin 2004/04**

(51) Int Cl.⁷: **C08J 9/00**, C08L 63/00,
C08J 9/32

(21) Numéro de dépôt: **03291102.6**

(22) Date de dépôt: **09.05.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **23.05.2002 FR 0206316**

(71) Demandeur: **Institut Français du Pétrole**
**92852 Rueil-Malmaison Cedex (FR)**

(72) Inventeurs:
• **Valerie Sauvant-Moynot**
**69006 Lyon (FR)**
• **Grenier Jacky**
**38890 Vignieu (FR)**

(54) **Composition thermodurcissable expansée**

(57) Une composition thermodurcissable comprenant :

- au moins une résine époxyde modifiée par au moins une polyamine aromatique, adite résine étant formée à partir d'au moins un polyépoxyde contenant dans sa molécule au moins 2 groupements amines primaires, le rapport molaire de la polyamine à l'époxyde étant tel que, à chaque groupement amine, il corresponde de 1,6 à 2,6 groupes époxydes ; et
- au moins un agent de porosité ou le (ou les) produit(s) de dégradation d'un tel agent de porosité

sert à former un matériau alvéolaire, utilisable notamment pour l'isolation thermique ou phonique, par exemple dans le domaine du bâtiment, de l'habitat, des transports, et plus particulièrement dans le domaine de l'exploitation pétrolière, du transport des hydrocarbures et du raffinage.

## Description

L'invention concerne de nouvelles formulations de compositions thermodurcissables pour la mise en oeuvre de matériaux alvéolaires, ainsi que les utilisations desdites compositions.

Par compositions thermodurcissables, il est entendu au sens de la présente description des matériaux présentant après durcissement une structure tridimensionnelle. Dans le cas de la présente invention, ladite structure tridimensionnelle est formée par une réaction de polymérisation entre une résine époxyde et une polyamine aromatique.

Au sens de la présente description, lesdits matériaux alvéolaires seront dénommés matériaux en mousse ou matériaux cellulaires ou matériaux expansés lorsque la porosité du matériau final est formée d'alvéoles emplies de gaz. Lorsque des corps creux plus ou moins denses participent selon l'invention à la création de la porosité dudit matériau, ces matériaux alvéolaires seront dénommés dans la présente description mousses syntactiques.

De façon générale, les matériaux selon la présente invention peuvent être utilisés pour l'isolation thermique ou phonique, par exemple dans le domaine du bâtiment, de l'habitat, des transports, et plus particulièrement dans le domaine de l'exploitation pétrolière, du transport des hydrocarbures et du raffinage.

Dans le cas préféré de l'utilisation des compositions thermodurcissables dans le domaine pétrolier, l'isolation thermique en mer des conduites ou canalisations et des pipelines, notamment des conduites ou canalisations métalliques et des pipelines en acier, s'avère être une condition impérative pour le transport des effluents pétroliers et gaz naturels. En effet le maintien d'une température élevée dans ces conduites permet de prévenir le dépôt de paraffines et/ou la formation d'hydrates. Ainsi, à faible profondeur, l'isolation des conduites est en général réalisée par des mousses cellulaires protégées de l'eau de mer par une enveloppe imperméable en polymère ou en acier. Aux plus grandes profondeurs, dès que la pression hydrostatique devient élevée, l'isolation des conduites est le plus souvent assurée par l'usage de mousses syntactiques. Classiquement, les mousses syntactiques sont placées au contact de la conduite sur leur face intérieure et sont au contact de l'eau de mer sur leur face extérieure.

Les travaux effectués par le demandeur ont montré que l'utilisation d'une composition thermodurcissable dans les domaines précités et notamment pour l'isolation de conduites en mer, nécessite que ladite composition thermodurcissable présente :

- une température de transition vitreuse de la matrice supérieure à celle des effluents, c'est à dire d'au moins 100 °C ;
- une bonne isolation thermique et une faible densité après thermodurcissement ;
- une période de latence relativement longue avant thermodurcissement, afin de faciliter la mise en oeuvre du matériau ;
- une viscosité dynamique relativement faible avant thermodurcissement, afin de faciliter la mise en oeuvre du matériau ; et
- une faible capacité d'adsorption d'eau après thermodurcissement, afin de conserver les propriétés d'isolation thermique à la température de service et réduire les risques d'hydrolyse.

Une composition thermodurcissable présentant une haute température de transition vitreuse est par exemple décrite dans la demande de brevet EP-A-0 833 036. La composition thermodurcissable décrite comprend une résine époxyde formée à partir d'un polyépoxyde contenant dans sa molécule au moins deux groupes époxydes et d'au moins une polyamine aromatique et il est proposé en outre d'insérer dans ladite composition un contrôleur d'écoulement pour en faciliter la mise en oeuvre .

Il a été trouvé, et c'est là l'objet de la présente invention, qu'il était possible de modifier les propriétés des matériaux tels que ceux par exemple décrits dans la demande EP-A-0 833 036, notamment pour adapter ceux-ci à une utilisation comme isolant de conduites en mer, en incorporant dans la composition initiale au moins un agent de porosité ou le (ou les) produit(s) de dégradation d'un tel agent de porosité.

Les compositions thermodurcissables de l'invention sont donc définies par le fait qu'elles comprennent :

- au moins une résine époxyde modifiée par au moins une polyamine aromatique, ladite résine étant formée à partir d'au moins un polyépoxyde contenant dans sa molécule au moins 2 groupements amines primaires, le rapport molaire de la polyamine à l'époxyde étant tel que, à chaque groupement amine, il corresponde de 1,6 à 2,6 groupes époxydes ;
- et au moins un agent de porosité ou le (ou les) produit(s) de dégradation d'au moins un agent de porosité.

Au sens de la présente description, on désigne par agent de porosité les agents porogènes choisis dans le groupe formé par les agents porogènes chimiques et les agents porogènes physiques conduisant à un matériau alvéolaire. Les agents de porosité considérés dans la présente invention peuvent également être des corps creux plus ou moins denses qui participent à la création de la porosité du matériau alvéolaire final, notamment des microsphères de verre ou d'une autre matière ou des cénosphères.

De manière inattendue, il a été trouvé par le demandeur que la présence desdits éléments porogènes au sein de la matrice n'entraînait pas une augmentation significative de la viscosité des compositions thermodurcissables. Ainsi, les viscosités dynamiques des compositions de résine en présence d'agent de porosité du type corps creux avant thermodurcissement sont de l'ordre de quelques centaines à quelques milliers de centipoises (1cP = 1mPa.s) entre 20 et 90 °C. De telles viscosités permettent une mise en oeuvre facilitée des mélanges précités, notamment par pompage, injection et/ou moulage des compositions avant durcissement, en particulier lors de l'isolation de conduites en mer.

En général, les mélanges sont pompés et coulés pour être placés dans un moule suivant des procédures industrielles classiques bien connues de l'homme du métier. En raison de la faible viscosité dynamique des mélanges, lesdites procédures pourront sans peine être effectuées sans risque d'endommager les agents de porosité, notamment dans le cas de l'utilisation de microsphères creuses en verre.

Enfin, les compositions de résine thermodurcissable selon la présente invention offrent un intérêt supplémentaire lors de la mise en oeuvre des matériaux alvéolaires, en présentant des durées élevées de latence qui permettent de réaliser la composition thermodurcissable selon l'invention sur de gros volumes, en accord avec les exigences industrielles.

La résine époxyde que l'on utilise dans le cadre de la présente invention est le plus souvent choisie dans le groupe formé par les résines commerciales suivantes : la résine diglycidyléther du bis-phénol-A ou du bis-phénol-F, la résine de bis-phénol formol, la résine phénol-novolaque, les résines cycloaliphatiques, les résines tri- ou tétrafonctionnelles, les résines formées à partir de triglycidyléther-isocyanurate et/ou de triglycidyléther-cyanurate et/ou de triglycidylcyanurate et/ou de triglycidyl-isocyanurate ou les mélanges d'au moins deux de ces résines. Les résines époxydes obtenues à partir de composés époxydés cités dans le brevet US-A-4 921 047 sont également utilisables dans le cadre de la présente invention.

Parmi les polyamines aromatiques utilisées dans le cadre de la présente invention pour modifier les résines époxydes, on peut considérer une première série d'amines aromatiques comportant un seul noyau aromatique comme par exemple le 3,5-diéthyl-2,4-diaminotoluène, le 3,5-diéthyl-2,6-diaminotoluène et les mélanges de ces deux isomères. On utilise le plus souvent un mélange de ces deux isomères, que l'on dénomme généralement DETDA.

Dans une deuxième série d'amines utilisées dans le cadre de la présente invention, on considère les amines comportant au moins deux noyaux aromatiques, ces deux noyaux aromatiques étant généralement reliés l'un à l'autre par un reste hydrocarboné bivalent, linéaire ou ramifié, comportant de 1 à 18 atomes de carbone. Ces deux noyaux aromatiques sont soit reliés par un groupe alcoyle bivalent, soit reliés l'un à l'autre par un reste hydrocarboné bivalent linéaire ou ramifié ayant de 6 à 18 atomes de carbone et comportant un noyau aromatique.

La polyamine aromatique peut aussi comporter au moins un substituant choisi dans le groupe formé par le fluor, l'iode, le brome et le chlore. Elle comporte de préférence au moins deux substituants alcoyles, chacun étant de part et d'autre d'un groupe amino.

Dans le cas où les deux noyaux aromatiques sont reliés par un reste alcoylène bivalent, ce reste sera de préférence un groupe méthylidène non substitué, ou substitué par au moins un radical choisi parmi les radicaux alcoyles et les radicaux halogénoalcoyles ayant de 1 à 3 atomes de carbone. Par exemple, ce reste alcoylène sera choisi dans le groupe formé par le groupe méthylidène, le groupe isopropylidène, les groupes halogénoisopropylidènes et le groupe hexafluoroisopropylidène. Dans ce cas, l'amine est de préférence choisie dans le groupe formé par :

- la 4,4'-méthylène-bis(2,6-diméthylaniline) ou M-DMA ;
- la 4,4'-méthylène-bis(2-isopropyl-6-méthyl-aniline) ou M-MIPA ;
- la 4,4'-méthylène-bis(2,6-diéthylaniline) ou M-DEA ;
- la 4,4'-méthylène-bis(2,6-diisopropylaniline) ou M-DIPA ; et
- la 4,4'-méthylène-bis(3-chloro-2,6-diéthylaniline) ou M-CDEA.

Parmi ces amines, la 4,4'-méthylène-bis(2,6-diéthylaniline) et la 4,4'-méthylène-bis(3-chloro-2,6-diéthylaniline) présentent un intérêt particulier.

Dans le cas où l'amine comporte deux noyaux aromatiques qui sont reliés l'un à l'autre par un reste hydrocarboné bivalent substitué ou non substitué ayant de 6 à 18 atomes de carbone et comportant un noyau aromatique, elle sera de préférence choisie dans le groupe formé par :

- la 4,4'-(phénylène-diisopropyl)-bis(2,6-diméthyl-aniline) ;
- la 4,4'-(phénylène-diisopropyl)-bis(2,6-diéthyl-aniline) ;
- la 4,4'-(phénylène-diisopropyl)-bis(2,6-dipropyl-aniline) ;
- la 4,4'-(phénylène-diisopropyl)-bis(2,6-diisopropyl-aniline) ;
- la 4,4'-(phénylène-diisopropyl)-bis(2,6-diméthyl-3-chloro-aniline) ;

- la 4,4'-(phénylène-diisopropyl)-bis(2,6-diéthyl-3-chloro-aniline) ;
- la 4,4'-(phénylène-diisopropyl)-bis(2,6-dipropyl-3-chloro-aniline) ;
- la 4,4'-(phénylène-diisopropyl)-bis(2,6-diisopropyl-3-chloro-aniline) ;
- la 3,3-(phénylène-diisopropyl)-bis(2,6-diméthyl-aniline) ;
- la 3,3-(phénylène-diisopropyl)-bis(2,6-diéthyl-aniline) ;
- la 3,3-(phénylène-diisopropyl)-bis(2,6-dipropyl-aniline) ;
- la 3,3-(phénylène-diisopropyl)-bis(2,6-diméthyl-3-chloro-aniline) ;
- la 3,3-(phénylène-diisopropyl)-bis(2,6-diéthyl-3-chloro-aniline) ;
- la 3,3-(phénylène-diisopropyl)-bis(2,6-dipropyl-3-chloro-aniline) ;
- la 3,3-(phénylène-diisopropyl)-bis(2,6-diisopropyl-aniline) ; et
- la 3,3-(phénylène-diisopropyl)-bis(2,6-diisopropyl-3-chloro-aniline).

Les polyamines aromatiques préférées sont choisies en raison de leur faible réactivité et aussi en raison de leur caractère non toxique.

De préférence, les compositions thermodurcissables selon la présente invention peuvent comporter une proportion de polyamine aromatique primaire en poids d'environ 20 à environ 60 parties pour 100 parties de résine époxy et le plus souvent d'environ 25 à environ 55 parties pour 100 parties de résine époxy.

Les compositions thermodurcissables selon la présente invention peuvent aussi contenir des catalyseurs actifs dans la réaction entre les résines époxydes et les polyamines aromatiques encombrées. Les catalyseurs actifs les plus souvent utilisés sont les imidazoles, les amines tertiaires et des complexes à base de bore trifluoré. On peut aussi ajouter des additifs choisis le plus souvent dans le groupe formé par les antioxydants, les pigments, les promoteurs d'adhérence, les stabilisateurs à la chaleur, au rayonnement et plus particulièrement au rayonnement ultraviolet, les retardateurs de flamme, les agents de démoulage, les agents de nucléation de moussage, les agents de dispersion, les lubrifiants, les colorants, les plastifiants, les produits ignifugeants, les agents de pontage, les surfactants, les agents de renfort, les charges renforçantes organiques, minérales ou organométalliques, les fibres de renfort minérales ou organiques, telles que par exemple les fibres de verre, de carbone ou de bore. Les matériaux alvéolaires selon la présente invention peuvent encore contenir des charges organiques ou minérales telles que par exemple du talc, de la silice ou du dioxyde de titane.

Dans le cadre de la présente invention, on peut également ajouter dans la composition thermodurcissable un durcisseur très réactif (c'est-à-dire présentant une réactivité supérieure au durcisseur principal et le plus souvent très largement supérieure) en petite proportion, par exemple d'environ 1 à 15 % en poids et souvent d'environ 1 à 10 % en poids par rapport au poids total de la composition.

Dans le cadre de la présente invention, on peut aussi ajouter dans la composition thermodurcissable un agent destiné à contrôler la viscosité lors de la mise en oeuvre de la mousse. L'agent contrôleur de viscosité est choisi par exemple parmi les polymères thermoplastiques tels que les polyéthersulfones, polyamides, les polyimides et les polyarylsulfones. Le contrôleur de viscosité peut également être choisi parmi les charges inorganiques épaississantes, par exemple les aérogels de silice.

La proportion de contrôleur de viscosité est habituellement d'environ 1 à 10 % en poids par rapport à la masse totale de la composition thermodurcissable, et de préférence 1 à 5 %.

L'invention a également pour objet les matériaux alvéolaires obtenus à partir des compositions thermodurcissables définies ci-dessus.

Les matériaux alvéolaires de la présente invention contiennent donc au moins un agent de porosité tel que précédemment décrit et au moins une résine époxyde modifiée par au moins une polyamine aromatique, ladite résine étant formée à partir d'au moins un polyépoxyde contenant dans sa molécule au moins deux groupes époxydes et d'au moins une polyamine aromatique, de préférence encombrée, comportant le plus souvent dans sa molécule au moins deux groupements amine primaire, au moins un substituant alcanoyle ayant de 1 à 12 atomes de carbone situé en alpha de l'un des groupements amine, le rapport molaire de l'amine à l'époxyde étant tel que, à chaque groupement amine, il corresponde de 1,6 à 2,6 groupes époxydes.

Ces agents porogènes sont des composés classiquement employés pour former des matériaux expansés bien connus des hommes du métier. Dans le matériau alvéolaire que l'on forme, on retrouve soit l'agent porogène tel quel, par exemple lorsqu'il s'agit d'un gaz ou d'un composé qui forme un gaz par élévation de température et provoque ainsi la formation des alvéoles, soit le (ou les) produit(s) de dégradation dudit agent porogène lorsque l'on utilise un composé qui par élévation de température va se transformer en libérant un gaz provoquant ainsi la formation des alvéoles dans la composition de polymères. A titre d'exemples d'agents porogènes physiques que l'on utilise pour la préparation des matériaux alvéolaires de la présente invention, on peut citer des composés liquides ou gazeux tels que l'azote, le dioxyde de carbone, des hydrocarbures légers, tels que le méthane, l'éthane, le propane, le butane, le pentane, le cyclopentane, l'hexane ou l'isoheptane, les chlorofluorhydrocarbures comme les chlorofluorocarbones (CFC) de type fréon, ou les composés similaires hydrogénés comme les hydrochlorofluorocarbones (HCFC). A titre d'exemples d'agents porogènes chimiques que l'on utilise pour la préparation des matériaux alvéolaires de la présente invention, on peut citer des composés solides qui se décomposent en formant un gaz, à une température propre à chaque agent porogène considéré. On utilise le plus souvent des agents porogènes chimiques dont la température de décomposition est d'environ 150 à 250 °C et fréquemment d'environ 180 à 250 °C. Ces agents porogènes chimiques sont des composés bien connus des hommes du métier. A titre d'exemples non limitatifs, on utilise des composés organiques tels que les composés azoïques et en particulier l'azodicarbonamide (1,1'-azobisformamide), les composés N-nitroso, les hydrazides, par exemple le p-toluènesulfonyl-hydrazide ou l'oxybis(benzènesulfonyl hydrazide, le paratoluènesulfonyl-semicarbazide, ou des composés inorganiques tels que le borohydrure de sodium, les sels d'ammonium des acides organiques ou minéraux, les bicarbonates de métaux alcalins ou alcalino-terreux, les mélanges de plusieurs composés qui par réaction entre eux libèrent un composé gazeux, par exemple les mélanges de carbonates et d'acides (bicarbonate de métal alcalin ou alcalino-terreux avec l'acide citrique).

Les agents de porosité considérés dans la présente invention peuvent également être des corps creux plus ou moins denses qui participent à la création de la porosité du matériau alvéolaire, notamment des microsphères de verre ou d'une autre matière ou des cénosphères.

La teneur en agent de porosité dans les matériaux expansés ou en produit de dégradation dudit agent porogène dans les matériaux expansés est habituellement d'environ 0,1 à 5 % en masse et le plus souvent d'environ 0,5 à 2,5 % en masse par rapport à la masse totale du matériau alvéolaire. La teneur en agent de porosité dans les mousses syntactiques est habituellement d'environ 20 à 70 % en volume et le plus souvent d'environ 50 à 60 % en volume par rapport au volume total du matériau alvéolaire. Les matériaux alvéolaires peuvent également être réalisées à partir d'un mélange d'agents de porosité de différentes natures.

Les matériaux alvéolaires issus de la présente invention présentent une température de transition vitreuse d'au moins 100 °C, mais également des propriétés d'isolation thermique améliorées grâce à l'ajout dudit agent de porosité. De plus, il résulte de l'utilisation de tels éléments porogènes une densité plus faible du matériau alvéolaire final, ce qui présente dans le domaine du transport des hydrocarbures de sérieux avantages notamment en termes d'allègement de la structure ou en termes de flottabilité en mer du matériau.

La présente invention sera mieux comprise et ses avantages apparaîtront plus clairement à la lecture des exemples décrits ci-après.

Dans les exemples qui suivent, les propriétés d'une composition selon l'invention sont décrites dans l'Exemple 2 et sont comparées à celles d'une formulation de référence (Exemple 1), de même nature mais dépourvue d'agent de porosité. Des mesures de conductivité thermique, de densité, de température de transition vitreuse, de temps de gel et de viscosité dynamique sur les compositions des Exemples 1 et 2 ont été effectuées et reportées dans le Tableau 1 ci-après.

Plus précisément, les propriétés isolantes ont été déterminées par la mesure de la conductivité thermique selon la norme ASTM C518, avec un appareil FOX 50. La conductivité thermique a été mesurée à deux températures (20 °C et 50 °C) sur des échantillons polymérisés à 150 °C pendant 4 heures et post-cuits à 200 °C pendant 2 heures.

La densité est calculée comme le rapport entre la masse et le volume d'un échantillon parallélépipédique.

La viscosité dynamique est mesurée à 90 °C avec un viscosimètre cône - plan PK100®, commercialisé par la société HAAKE.

Le temps de gel est mesuré à 120 °C avec un appareil commercialisé sous le nom TROMBOMAT® commercialisé par la société PRODERMAT, et qui est capable d'évaluer le passage du temps de gel, ce qui permet de discuter la réactivité de la composition thermodurcissable étudiée.

Les propriétés thermomécaniques des échantillons ont été déterminées par une analyse DMTA ("Dynamic Mechanical Thermal Analysis"), en simple encastrement à une fréquence de 1 Hz. La température de transition vitreuse (Tg) est mesurée par convention au maximum du pic de dissipation E".

Ces essais sont réalisés avec la résine époxy DGEBA fabriquée et vendue par la société CIBA sous la référence LY 556®. Les principales caractéristiques de la résine sont :

- Viscosité dynamique à 25 °C : 12 Pa.s ;
- Teneur en époxyde : 1,15 équivalent par kilogramme ; et
- Poids spécifique : 1,15 g/cm$^3$.

Afin de respecter la stoechiométrie de la réaction, il est nécessaire de calculer au préalable la quantité théorique de durcisseur (amine) à introduire dans le mélange pour 100 grammes de prépolymère époxyde. Cette quantité est aussi appelée "ppcr" (partie en poids pour cent grammes de résine).

$$\text{ppcr} = 100 \times \frac{\text{Poids équivalent d'amine(*)}}{\text{Poids équivalent d'époxy(*)}}$$

(*) il s'agit de poids équivalents par hydrogène réactif.

Le poids équivalent du pré polymère époxy est donné par le fournisseur (CIBA) : 5,32 g équivalent époxy par kg (soit 1000 : 5,32 = 187,79 g/mole).

La stoechiométrie implique la réaction d'une molécule de prépolymère époxy portant deux groupes époxydes avec deux hydrogènes mobiles de l'amine. La diamine primaire MCDEA (masse moléculaire 379,38g/mol) utilisée dans les exemples possède quatre hydrogènes mobiles par molécule. La quantité d'amines en ppcr pour l'amine utilisée est de 50,5.

**EXEMPLES**

Les exemples ci-après illustrent l'invention sans la limiter. L'Exemple 1 relatif à l'art antérieur est donné à titre de comparaison. Les compositions testées sont élaborées comme décrit dans les Exemples 1 et 2 ci-après.

Exemple 1

50,50 g de M-CDEA sont ajoutés sous agitation dans 100 g de DGEBA chauffée à 90 °C. L'agitation est poursuivie après dissolution complète pendant environ 20 minutes. La température est ensuite abaissée à 4 °C pour conserver la composition.

Les propriétés de cette composition sont données dans le Tableau 1.

Exemple 2 (selon l'invention)

50,50 g de M-CDEA sont ajoutés sous agitation dans 100 g de DGEBA chauffée à 90 °C. L'agitation (40 tours/min) est poursuivie après dissolution complète pendant environ 10 minutes puis la température est portée à 110°C. Des microsphères de verre creuses de densité 0,25 g/cm$^3$ sont ensuite ajoutées sous agitation et sous vide au mélange à raison de 55 % en volume.

Les résultats des tests de ces compositions sont donnés dans le Tableau 1 ci-après. La viscosité mesurée est la viscosité dynamique à 90 °C exprimée en millipascals seconde (mPa.s). Le temps de gel évalué à 120 °C est donné en heures (h). La transition vitreuse est en degrés Celsius ( °C) et la conductivité thermique est donnée en watt/mètre.Kelvin (W/m.K).

Tableau 1

| | Exemple 1 | Exemple 2 |
|---|---|---|
| Temps de gel à120 °C (h) | 8,0 | 6,3 |
| Viscosité dynamique à 90 °C (mPa.s) | 800 | 2100 |
| Conductivité thermique à 20 °C (W/m.K) à 50 °C (W/m.K) | 0,209 0,222 | 0,119 0,124 |
| Densité à 20 °C | 1,20 | 0,70 |
| Température de transition vitreuse (°C) | 170 | 171 |

D'après les résultats des déterminations qui figurent dans le tableau qui précède, on voit que la composition selon la présente invention (Exemple 2) a une conductivité thermique largement inférieure à la conductivité thermique de la composition de référence de l'Exemple 1 et présente par là un avantage indéniable, notamment en vue d'une application d'isolation thermique. D'autre part, les propriétés de viscosité dynamique et de temps de gel (latence) restent du même ordre de grandeur lorsqu'un agent de porosité est ajouté, en ce sens que les valeurs de ces caractéristiques restent dans un intervalle propre à une mise en oeuvre de matériaux alvéolaires à partir de la composition sans difficulté excessive, notamment sur de gros volumes.

**Revendications**

1. Composition thermodurcissable **caractérisée en ce qu'**elle comprend :

   - au moins une résine époxyde modifiée par au moins une polyamine aromatique, ladite résine étant formée à partir d'au moins un polyépoxyde contenant dans sa molécule au moins 2 groupements amines primaires, le rapport molaire de la polyamine à l'époxyde étant tel que, à chaque groupement amine, il corresponde de 1,6 à 2,6 groupes époxydes ;
- et au moins un agent de porosité ou le (ou les) produit(s) de dégradation d'au moins un agent de porosité.

2. Composition thermodurcissable selon la revendication 1 **caractérisée en ce que** ledit agent de porosité ou ledit (ou lesdits) produit(s) de dégradation dudit agent de porosité est choisi dans le groupe formé par les agents porogènes chimiques et les agents porogènes physiques et conduit à un matériau expansé.

3. Composition thermodurcissable selon l'une des revendications 1 et 2 **caractérisée en ce que** sa viscosité dynamique, de quelques centaines à quelques milliers de centipoises viscosités, permet une mise en oeuvre par pompage, injection et/ou moulage.

4. Composition thermodurcissable selon l'une des revendications 1 à 3 **caractérisée en ce que** la polyamine aromatique utilisée est choisie dans le groupe formé par les amines aromatiques comportant un seul noyau aromatique et les amines aromatiques comportant au moins deux noyaux aromatiques, les deux noyaux aromatiques étant reliés l'un à l'autre par un reste hydrocarboné bivalent linéaire ou ramifié comportant de 1 à 18 atomes de carbone.

5. Composition thermodurcissable selon l'une des revendications 1 à 4 **caractérisée en ce que** la polyamine aromatique comporte au moins un substituant alcoyle ayant de 1 à 12 atomes de carbone situé(s) en alpha de l'un des groupements amines.

6. Composition thermodurcissable selon l'une des revendications 1 à 5 **caractérisée en ce qu'**elle comprend en outre au moins un durcisseur à une teneur d'environ 1 % à environ 15 % en poids.

7. Composition thermodurcissable selon l'une des revendications 1 à 6 **caractérisée en ce qu'**elle comprend en outre au moins un contrôleur de viscosité.

8. Composition thermodurcissable selon la revendications 7 **caractérisée en ce que** ledit contrôleur de viscosité est choisi parmi les polymères thermoplastiques et les charges inorganiques épaississantes.

9. Composition thermodurcissable selon la revendication 8 **caractérisée en ce que** ledit contrôleur de viscosité est choisi parmi les polyéthersulfones, les polyamides, les polyimides, les polyarylsulfones et les aérogels de silice.

10. Composition thermodurcissable selon l'une des revendications 7 à 9 **caractérisée en ce que** la teneur en ledit contrôleur de viscosité est d'environ 1 % à environ 10 % en poids.

11. Méthode de préparation d'un matériau alvéolaire **caractérisée en ce que** l'on soumet à un thermodurcissement une composition thermodurcissable selon l'une des revendications 1 à 10.

12. Matériau alvéolaire obtenu à partir d'une composition thermodurcissable par un procédé selon la revendication 11.

13. Matériau alvéolaire selon la revendication 12 **caractérisée en ce que**, ledit agent de porosité ou ledit (ou lesdits) produit(s) de dégradation dudit agent de porosité étant choisi dans le groupe formé par les agents porogènes chimiques et les agents porogènes physiques, il consiste en un matériau expansé.

14. Matériau alvéolaire selon la revendication 13 **caractérisée en ce que** la teneur en poids dudit agent de porosité ou dudit (desdits) produit(s) de dégradation dudit agent de porosité est comprise entre environ 0,1 % et environ 5 % par rapport à la masse totale dudit matériau expansé.

15. Matériau alvéolaire selon la revendication 12 **caractérisée en ce que**, ledit agent de porosité étant choisi parmi les corps creux, il consiste en une mousse syntactique.

16. Matériau alvéolaire selon la revendication 15 **caractérisée en ce que** la teneur en agent de porosité est comprise entre environ 20 % et environ 70 % en volume par rapport au volume total de ladite mousse syntactique.

17. Utilisation d'un matériau alvéolaire selon l'une des revendications 12 à 16 dans le domaine de l'exploitation pétrolière, du transport d'hydrocarbures ou du raffinage.

**Office européen des brevets**

## RAPPORT DE RECHERCHE EUROPEENNE

Numéro de la demande

EP 03 29 1102

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 000 964 A (INST FRANCAIS DU PETROL) 17 mai 2000 (2000-05-17) * le document en entier * | 1-17 | C08J9/00 C08L63/00 C08J9/32 |
| A | DATABASE WPI Section Ch, Week 198232 Derwent Publications Ltd., London, GB; Class A32, AN 1982-67186E XP002231530 & JP 57 108139 A (HITACHI CHEM CO LTD) 6 juillet 1982 (1982-07-06) * abrégé * | 1-17 | |
| A | US 4 828 771 A (KISHIMA NOBORU ET AL) 9 mai 1989 (1989-05-09) * revendications * | 1-17 | |
| A | DATABASE WPI Section Ch, Week 7835 Derwent Publications Ltd., London, GB; Class A97, AN 78-62855A XP002110342 & JP 53 027303 B (MITSUBISHI PLASTICS IND LTD) 8 août 1978 (1978-08-08) * abrégé * | 1 | DOMAINES TECHNIQUES RECHERCHES (Int.Cl.7) C08J C08L C08G |
| X | GB 912 967 A (SHELL INTERNAT RES MIJ N V) 12 décembre 1962 (1962-12-12) * page 3, ligne 130 - page 4, ligne 45 * * revendications * | 9,10 | |

Le présent rapport a été établi pour toutes les revendications

| Lieu de la recherche | Date d'achèvement de la recherche | Examinateur |
|---|---|---|
| La Haye | 14 novembre 2003 | Oudot, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 1102

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-11-2003

| Document brevet cité au rapport de recherche | | Date de publication | Membre(s) de la famille de brevet(s) | | Date de publication |
|---|---|---|---|---|---|
| EP 1000964 | A | 17-05-2000 | FR | 2785905 A1 | 19-05-2000 |
| | | | EP | 1000964 A1 | 17-05-2000 |
| | | | JP | 2000143864 A | 26-05-2000 |
| | | | US | 6403669 B1 | 11-06-2002 |
| JP 57108139 | A | 06-07-1982 | JP | 1237481 C | 31-10-1984 |
| | | | JP | 59010743 B | 10-03-1984 |
| US 4828771 | A | 09-05-1989 | JP | 1801472 C | 12-11-1993 |
| | | | JP | 5008936 B | 03-02-1993 |
| | | | JP | 63075044 A | 05-04-1988 |
| | | | CA | 1317712 C | 18-05-1993 |
| | | | DE | 3730823 A1 | 24-03-1988 |
| | | | FR | 2603892 A1 | 18-03-1988 |
| | | | GB | 2196633 A ,B | 05-05-1988 |
| | | | IT | 1222671 B | 12-09-1990 |
| | | | KR | 9004673 B1 | 02-07-1990 |
| | | | SE | 502303 C2 | 02-10-1995 |
| | | | SE | 8703566 A | 18-03-1988 |
| JP 53027303 | B | 08-08-1978 | AUCUN | | |
| GB 912967 | A | 12-12-1962 | FR | 1269371 A | 11-08-1961 |
| | | | NL | 253812 A | |

EPO FORM P0460

Pour tout renseignement concernant cette annexe : voir Journal Officiel de l'Office européen des brevets, No.12/82